# EUROPÄISCHE PATENTSCHRIFT

(11) **EP 1 838 987 B1**
(45) Veröffentlichungstag und Bekanntmachung des Hinweises auf die Patenterteilung: **09.11.2011**
(21) Anmeldenummer: 06704220.0
(22) Anmeldetag: 18.01.2006
(51) Int. Cl.: F16L 37/091

(54) **ANSCHLUSSVORRICHTUNG FÜR MEDIENLEITUNGEN**
CONNECTING DEVICE FOR MEDIA PIPES
DISPOSITIF DE RACCORDEMENT POUR CONDUITES A FLUIDES

(30) Priorität: 18.01.2005 DE 202005000749 U
(43) Veröffentlichungstag der Anmeldung: 03.10.2007
(73) Patentinhaber: Voss Automotive GmbH, 51688 Wipperfürth (DE)
(72) Erfinder: SALOMON-BAHLS, Bernd, 58553 Halver (DE); ZENSES, Frank, 50354 Hürth (DE); HAGEN, Harald, 51688 Wipperfürth (DE); SUHR, Andreas, 50823 Köln (DE)
(74) Vertreter: Patentanwälte Dr. Solf & Zapf
(86) Internationale Anmeldenummer: PCT/EP2006/050278
(87) Internationale Veröffentlichungsnummer: WO 2006/077223

(56) Entgegenhaltungen:
- EP-A- 0 378 035
- EP-A- 0 819 880
- EP-A- 1 041 332
- WO-A-2004/113777
- DE-A1- 10 237 166
- DE-U1- 29 807 763

## Beschreibung

Die vorliegende Erfindung betrifft eine Anschlußvorrichtung gemäß dem Oberbegriff des Patentanspruchs 1.

Es handelt sich um eine Anschlaßvorrichtung für Medienleitungen (Rohr- oder Schlauchleitungen für pneumatische oder hydraulische Druck-und Strömungsmedien), bestehend aus einer Einpresspatrone, die mit einem Einpressabschnitt in eine Anschlussöffnung eines Aufnahmeteils durch einen einfachen Steckfügevorgang einsetzbar ist, wobei der Einpressabschnitt auf seinem Außenumfang widerhakenartige Halteelemente zum form- oder kraftformschlüssigen Verkrallen in der Anschlussöffnung des Aufnahmeteils aufweist.

Das Dokument DE 102 37 166 A1 betrifft eine Pumpe, offenbart dabei aber auch einen Anschlussstutzen, der im Sinne des Oberbegriffs des Patentanspruchs 1 in eine Aufnahmeöffnung eines Gehäuseteils eingesetzt wird und demnach grundsätzlich als "Einpresspatrone" bezeichnet werden kann. Der Anschlussstutzen weist hierzu einseitig einen in die Aufnahmeöffnung einsetzbaren "Einpressabschnitt" und anderseitig einen Schlauchstutzen zum Anschluss einer Medienleitung auf. Weiterhin weist der Anschlussstutzen auf seinem Außenumfang widerhakenartige Halteelemente zum Verkrallen in der Aufnahmeöffnung auf. Diese Halteelemente sind auch als Bestandteile eines metallischen, ringförmigen und in einer Ringnut sitzenden Halteteils ausgebildet. Zudem sind auch nach innen wirkende Sicherungsmittel zur Sicherung des Anschlusstutzens gegen Verdrehen innerhalb des Halteteils offenbart.

Die WO 2004/029497 A1 offenbart einige Ausführungen einer Einpresspatrone (Figuren 11 bis 18 und Ansprüche 11 bis 15), die in eine Anschlußöffnung eines Aggregateteils einsetzbar bzw. einpressbar ist. Zur Halterung innerhalb der Anschlußöffnung ist auf dem Außenumfang des Einpressabschnittes mindestens ein radial vorstehendes Halte- bzw. Zahnelement zum form- oder kraftformschlüssigen Eingriff in die Innenfläche der Anschlußöffnung vorgesehen. Hierbei ist eine Ausführung der Halteelemente beschrieben, die nach dem Einsetzen bzw. Einpressen ein Lösen durch eine Herausschraubbewegung ermöglicht. In der Praxis hat sich gezeigt, dass das Einpressen eine hohe Kraft erfordert und daher nicht manuell, sondern nur mit einer geeigneten Pressvorrichtung möglich ist. Zudem ist die Herstellung der Komponenten mit einem hohen Aufwand verbunden. Beispielsweise muß die Anschlußöffnung des Aggregateteils durch spanende Bearbeitung als zylindrische Bohrung hergestellt werden. Die bekannten äußeren Halteelemente sind entweder als Metallteile bereichsweise in das Material der aus Kunststoff bestehenden Einpresspatrone eingebettet oder als Ansätze der aus Metall bestehenden Einpresspatrone gebildet.

Der vorliegenden Erfindung liegt die Aufgabe zugrunde, eine Anschlußvorrichtung der genannten Art zu schaffen, die sich durch verbesserte Gebrauchseigenschaften auszeichnet.

Erfindungsgemäß wird dies durch die Merkmale des unabhängigen Anspruchs 1 erreicht. Vorteilhafte Ausgestaltungen der Erfindung sind in den abhängigen Ansprüchen enthalten.

Zur Lösung der zu Grunde liegenden Aufgabe ist gemäß dem Anspruch 1 vorgesehen, dass zusätzlich zu den radial nach innen wirkenden Sicherungsmitteln auch radial nach außen wirkende Sicherungsmittel vorgesehen sind, die das Halteteil gegen Verdrehen in der Anschlussöffnung sichern, so dass insgesamt Sicherungsmittel zur Sicherung der Einpresspatrone gegen Verdrehungen relativ zu dem Aufnahmeteil vorhanden sind.

Da die auf dem Außenumfang über den Umfang verteilt angeordneten Halteelemente der Einpresspatrone als Bestandteile eines metallischen, ringförmigen sowie vorzugsweise an einer Umfangsstelle eine axial und radial durchgehende Unterbrechung aufweisenden Halteteils sind, kann das Halteteil als separates Einzelteil vorgefertigt und durch einfaches Aufsetzen auf den Einpressabschnitt der Einpresspatrone montiert werden. Dazu ist das Halteteil als im Wesentlichen zylindrisches (bzw. wegen der Umfangsunterbrechung "teilzylindrisches") Blechformteil ausgebildet, wobei die Halteelemente als freigeschnittene und schräg nach außen gebogene Haltezungen ausgebildet sind. Dabei kann das Halteteil mit Vorteil derart aus einem Drahtmaterial flach bzw. teil-hohlzylindrisch gewalzt sein, dass seine Randkanten natürliche Rundungsradien aufweisen. Diese Maßnahme trägt zu einer wirtschaftlichen Herstellung bei, und zwar durch Einsparung eines zusätzlich Entgrat-Vorganges (z. B. sog. Trovalisieren).

In weiterer vorteilhafter Ausgestaltung der Erfindung ist vorgesehen, dass die Anschlußöffnung des Aufnahmeteils zu ihrer äußeren Mündungsseite hin leicht konisch erweitert ausgebildet ist. Dadurch wird eine vereinfachte Herstellung auch des Aufnahmeteils ermöglicht, indem dieses als Druckgußteil z. B. aus Kunststoff, Aluminium oder dergleichen geformt werden kann. Dabei wirkt die leichte Konizität der Anschlußöffnung als Entformschräge und macht dadurch ein einfaches Entformen mit Kemzug möglich. Zudem erübrigt sich jegliche spanende Nachbearbeitung der Anschlußöffnung. Dies ist mit dem zusätzlichen Vorteil verbunden, dass die durchgehend sehr glatte Guß-Oberfläche erhalten bleibt, wohingegen durch eine spanende Bearbeitung bei manchen Werkstoffen das darunterüegende, poröse Gußmaterial freigelegt werden würde. Die glatte Oberfläche ist für das Einpressen und für die Abdichtung der Einpresspatrone vorteilhaft. Zudem wird auch eine Reduzierung der zum Einpressen aufzubringenden Kraft erreicht, so dass auch eine manuelle Montage möglich ist. Die durch die vorteilhafte Ausgestaltung erreichte Einpresskraft liegt jedenfalls unter 500 N, vorzugsweise sogar im Bereich um 150 N oder weniger.

Die Einpresspatrone ist mit Vorteil auf ihrer dem Einpressabschnitt gegenüberliegenden Seite als Kupplungsteil einer Steckkupplung zum lösbaren Anschluß einer Medienleitung ausgebildet, und zwar vorzugsweise als Muffenteil mit einer Stecköffnung zur Aufnahme eines Einsteckabschnittes eines mit der Medienleitung verbundenen bzw. verbindbaren Steckerteils. Dabei ist eine Halteeinrichtung zum lösbaren Arretieren des Einsteckabschnittes in seinem in die Stecköffnung eingesteckten und umfangsgemäß über eine Dichtung abgedichteten Zustand vorgesehen. Die Ausgestaltung der Steckkupplung und der zugehörigen Halteeinrichtung ist grundsätzlich beliebig. Nachfolgend werden einige bevorzugte Ausführungsbeispiele hierfür erläutert werden. In allen Fällen bildet die Einpresspatrone eine Art Adapter, um einen Steckverbindungsanschluß an einem beliebigen Aufnahmeteil (beliebiges Verbindungsteil, z. B. auch Aggregat, wie beispielsweise Ventilgehäuse, Druckspeicher/-Erzeuger oder dergleichen) zu ermöglichen, welches lediglich die erfindungsgemäße Anschlußöffnung aufzuweisen braucht.

Die Erfindung wird im Folgenden anhand der Zeichnungen und darin veranschaulichter, bevorzugter Ausführungsbeispiele genauer erläutert. Dabei zeigen:
- Fig. 1: eine erste Ausführungsform einer erfindungsgemäßen Anschlußvorrichtung im Axialschnitt mit einem zusätzlichen Steckerteil in einer ersten Steckposition (sog. Vorraststellung),
- Fig. 2: die Ausführungsform gemäß Fig. 1 in einer winkelversetzten Axialschnitt-Ebene und in einer zweiten Steckposition des Steckerteils (sog. Vollraststellung),
- Fig. 3: einen weiteren, nochmals winkelversetzten Axialschnitt der Anschlußvorrichtung gemäß Fig. 1 und 2, jedoch ohne Steckerteil,
- Fig. 4: einen Axialschnitt nur der Einpresspatrone der Ausführung gemäß Fig. 1 bis 3 mit geschlossener Dreharretierung,
- Fig. 5: einen weiteren, winkelversetzten Axialschnitt der Einpresspatrone gemäß Fig. 4 mit offener Dreharretierung,
- Fig. 6 und 7: Perspektivansichten von Einzelteilen eines zweiteilig ausgebildeten Einpresspatronen-Gehäuses der Ausführung nach Fig. 1 bis 5,

- Fig. 8 und 9: zugehörige Schnittansichten zu Fig. 6 bzw. 7,
- Fig. 10: einen Axialschnitt des Aufnahmeteils mit der Anschlußöffnung in einer ersten Ausführung,
- Fig. 11: einen Axialschnitt analog zu Fig. 10 in einer zweiten Ausführung,
- Fig. 12: eine Ausschnittvergrößerung des Bereichs XII in Fig. 11,
- Fig. 13: eine Ausschnittvergrößerung des Bereichs XIII in Fig. 11 in einer gegenüber Fig. 12 alternativen Ausgestaltung,
- Fig. 14: eine Perspektivansicht eines Halteteils der Einpresspatrone,
- Fig. 15: eine vergrößerte Seitenansicht des Halteteils gemäß Fig. 14,
- Fig. 16: einen Schnitt des Halteteils in der Ebene A-A gemäß Fig. 15,
- Fig. 17: einen Schnitt in der Ebene B-B gemäß Fig. 15,
- Fig. 18: einen Schnitt in der Ebene C-C gemäß Fig. 15,
- Fig. 19: eine Vergrößerung des Details E in Fig. 17,
- Fig. 20: eine Vergrößerung des Details F in Fig. 15,
- Fig. 21: eine Vergrößerung des Details G in Fig. 18,
- Fig. 22: einen vergrößerten Schritt in der Ebene H-H gemäß Fig. 16,
- Fig. 23: einen stark vergrößerten Ausschnitt eines Schnittes in der Ebene A-A gemäß Fig. 15 (allerdings mit entgegengesetzter Blickrichtung) im Bereich eines Halteelementes des Halteteils,

- Fig. 24: eine weitere Ausführungsform einer erfindungsgemäßen Anschlußvorrichtung in einem Axialschnitt ähnlich Fig. 1 ohne Steckerteil,
- Fig. 25: die Anschlußvorrichtung nach Fig. 24 mit einem eingesteckten, von einem Ende einer Medienleitung gebildeten Einsteckabschnitt,
- Fig. 26: eine weitere Ausführungsform der erfindungsgemäßen Anschlußvorrichtung mit einem gesteckten Steckerteil, und
- Fig. 27: eine vergrößerte Ansicht nur der Einpresspatrone der Ausführung gemäß Fig. 26.

Eine erfindungsgemäße Anschlußvorrichtung 1 besteht aus einer Einpresspatrone 2, die mit einem Einpressabschnitt 4 in eine Anschlussöffnung 6 eines Aufnahmeteils 8 einsetzbar (einpressbar) ist. Das Aufnahmeteil 8 kann ein beliebiges Verbindungs-oder Anschlussteil sein, beispielsweise auch ein Gerät bzw. Aggregat, wie ein Ventilgehäuse, ein Druckerzeuger oder Druckspeicher oder dergleichen.

Die Einpresspatrone 2 ist bevorzugt als Kupplungsteil einer Steckkupplung zum lösbaren Anschluß einer Medienleitung ausgebildet, und zwar insbesondere als Muffenteil mit einer Stecköffnung 10 zur Aufnahme eines Einsteckabschnittes 12 eines Steckerteils 14, wobei das Steckerteil 14 seinerseits mit einer Medienleitung verbindbar oder verbunden ist. Somit bildet die Einpresspatrone 2 einen Adapter, über den eine Medienleitung an dem jeweiligen, lediglich die Anschlußöffnung 6 aufweisenden Aufnahmeteil 8 über ein Stecksystem lösbar anschließbar ist.

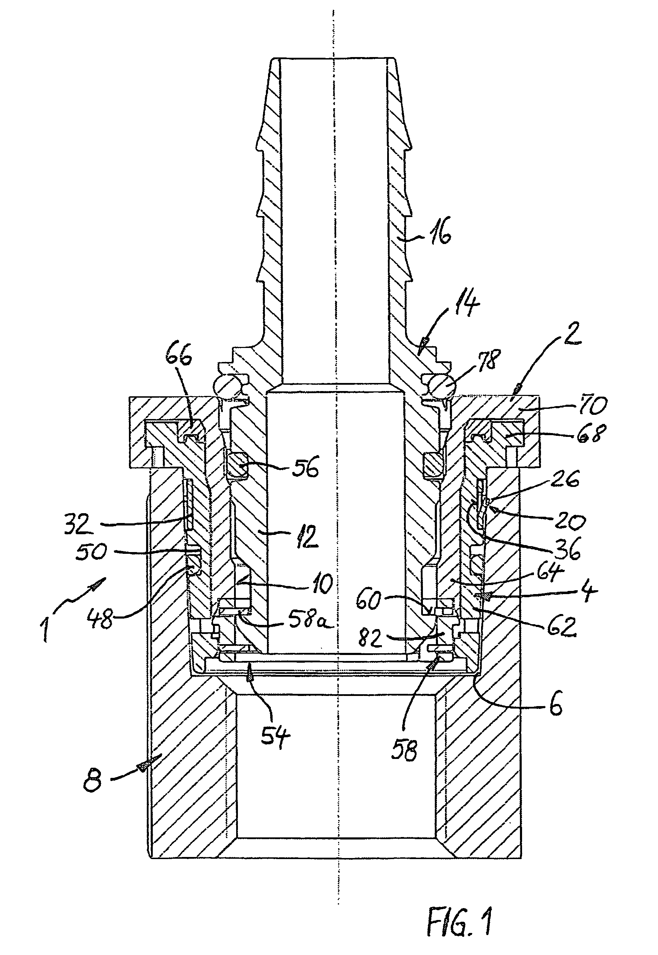

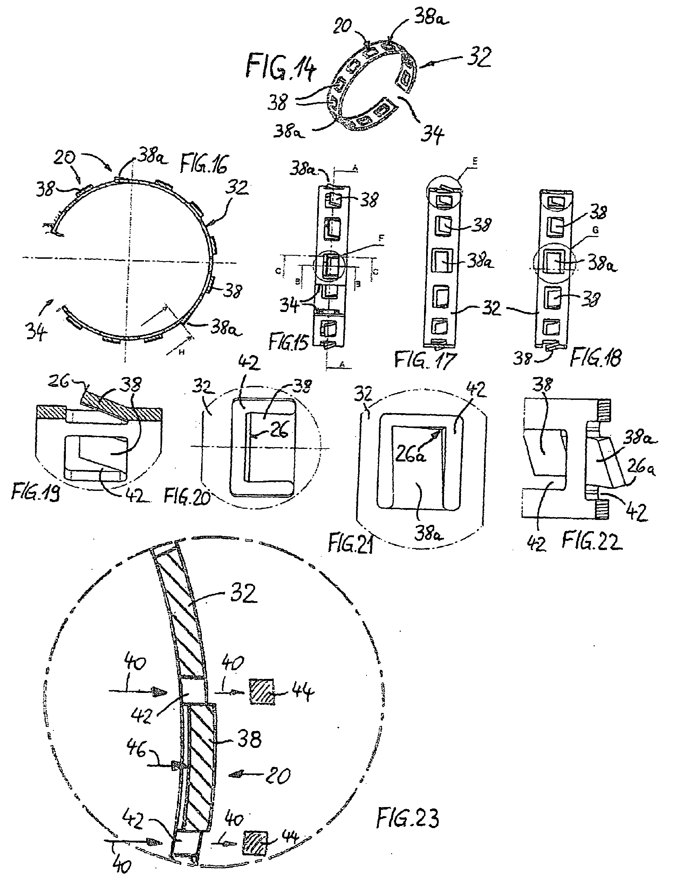

Die in den Figuren 1, 2 und 20 nicht dargestellte Medienleitung ist beispielsweise auf einen Anschlußdom 16 des Steckerteils 14 aufsteckbar. In der sogenannten "domlosen" Ausführung gemäß Fig. 18 und 19 bildet die Medienleitung 18 selbst das Steckerteil 14, indem sie mit einem den Einsteckabschnitt 12 bildenden Leitungsende direkt in die Stecköffnung 10 einsteckbar ist.

Die Einpresspatrone 2 weist auf dem Außenumfang ihres Einpressabschnittes 4 widerhakenartige Halteelemente 20 zum form- oder kraftformschlüssigen - und dadurch unter normalen Betriebsbedingungen unlösbaren - Verkrallen in der Anschlussöffnung 6 des Aufnahmeteils 8 auf.

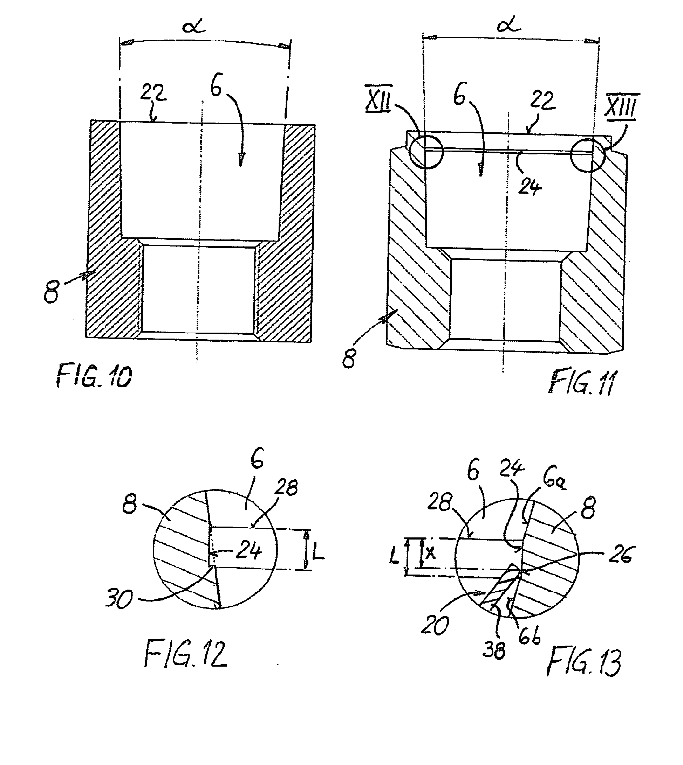

Wie sich insbesondere aus Fig. 10 und 11 ergibt, ist bevorzugt die Anschlußöffnung 6 des Aufnahmeteils 8 zu ihrer äußeren Mündungsseite 22 hin leicht konisch erweitert ausgebildet. Hierbei bedeutet die Angabe "leicht konisch", dass sich die Anschlußöffnung 6 mit einem Konuswirikel a etwa im Bereich von 1° bis 6° erweitert. Vorzugsweise beträgt der Konuswinkel a etwa 4,5°.

In der Ausführung gemäß Fig. 10 ist die Anschlussöffnung 6 über ihre axiale Länge hinweg durchgehend leicht konisch erweitert ausgebildet. An die konische Anschlussöffnung 6 schließt sich über eine radial nach innen vorspringende Stufe ein Innengewindeabschnitt an. Diese Ausführung des Aufnahmeteils bildet somit einen Anschlussadapter mit Anschlussgewinde.

In der in Fig. 11 veranschaulichten, vorteilhaften Ausgestaltung weist dem gegenüber die leicht konische Anschlußöffnung 6 im Wirkbereich der Halteelemente 20 des eingesetzten Einpressabschnittes 4 der Einpresspatrone 2 einen axial sehr kurz bemessenen, zylindrisch ausgebildeten Halteflächenabschnitt 24 auf. Wie sich aus den vergrößerten Ausschnitten in Fig. 12 und 13 ergibt, weist der zylindrische Halteflächenabschnitt 24 eine kurze axiale Länge L auf, die etwa im Bereich von 0,5mm bis 4mm, insbesondere 1,5mm bis 2,5mm liegt. Der zylindrische Halteflächenabschnitt 24 trägt zu einem effektiven Verkrallen der Halteelemente 20 bei. We sich hierzu aus Fig. 13 ergibt, gelangen die Halteelemente 20 im korrekt eingesetzten Zustand des Einpressabschnittes 4 derart mit äußeren Haltekanten 26 im Bereich des zylindrischen Halteflächenabschnittes 24 zum verkrallenden Einriff, dass zwischen den Haltekanten 26 und dem der Mündungsseite 22 zugekehrten Ende 28 des zylindrischen Hatteflächenabschnittes 24 ein axialer Abstand x vorhanden ist, der mindestens 0,5 mm beträgt.

Gemäß Fig. 12 kann der zylindrische Halteflächenabschnitt 24 durch eine radiale Vertiefung bzw. Ausnehmung in der konischen Innenfläche der Anschlussöffnung 6 gebildet sein. Vorzugsweise geht hierbei der Halteflächenabschnitt 24 einerseits zur Mündungsseite 22 hin mit gleichem Innendurchmesser, also ohne radiale Stufe, und andererseits gegenüberliegend über eine radiale, den Innendurchmesser sprunghaft reduzierende Stufenfläche 30 in die konische Innenfläche der Anschlussöffnung 6 über.

In der in Fig. 13 dargestellten Alternative geht der zylindrische Halteflächenabschnitt 24 in beiden axialen Richtungen in mit jeweils gleichem Innendurchmesser, also ohne radiale, den Durchmesser sprunghaft ändernde Stufen, angrenzende konische lnnenflächenabschnitie 6a bzw. 6b der Anschlussöffnung 6 über.

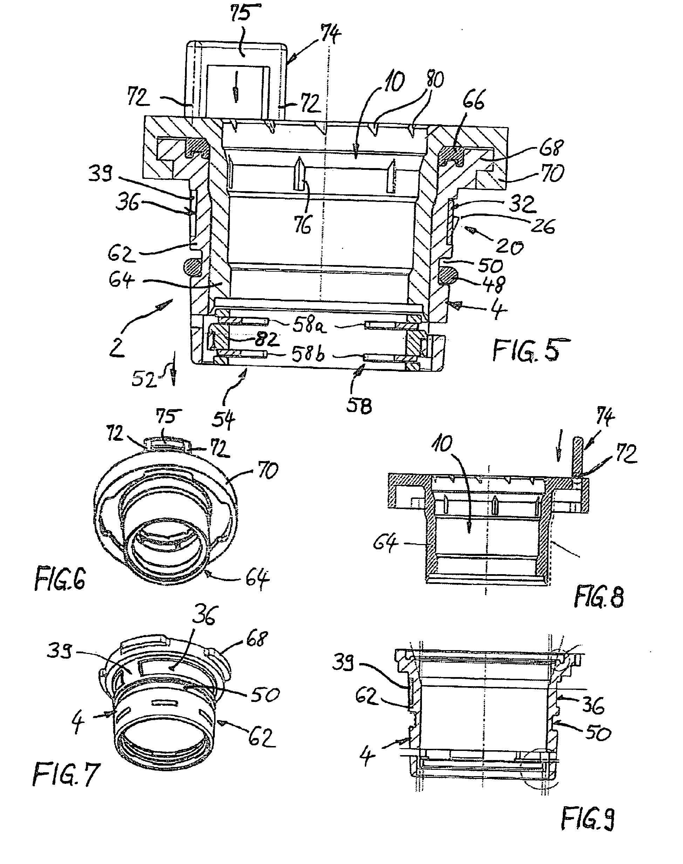

Erfindungsgemäß sind die Halteelemente 20 als Bestandteile eines metallischen, ringförmigen Halteteils 32 ausgebildet. Dieses ringförmige Halteteil 32 weist vorzugsweise an einer Umfangsstelle eine axial und radial durchgehende Unterbrechung 34 auf, um das ringförmige Halteteil 32 in eine auf dem Außenumfang des Einpressabschnittes 4 der Einpresspatrone 2 vorgesehene Ringnut 36 einsetzen zu können. Das Halteteil 32 mit der Unterbrechung 34 ist am besten in den gesonderten Darstellungen in Fig. 14 bis 23 zu erkennen. Zu der Ringnut 36 des Einpressabschnittes 40 wird insbesondere auf Fig. 5, 7 und 9 verwiesen.

Gemäß Fig. 14 bis 23 ist das Halteteil 32 als im Wesentlichen zylindrisches bzw. wegen der Umfangsunterbrechung 34 teilzylindrisches Blechformteil ausgebildet. Dabei sind die Halteelemente 20 als freigeschnittene und schräg nach außen gebogene Haltezungen 38, 38a ausgebildet, die an ihren freien Enden die oben bereits erwähnten Haltekanten 26 aufweisen. Hierbei ist eine erste Art von Haltezungen 38 vorgesehen, die sich in axialer, der Einsetzrichtung entgegengesetzter Richtung und schräg radial nach außen erstrecken. Bevorzugt ist als Sicherungsmittel gegen Verdrehen der Einpresspatrone 2 innerhalb der Anschlussöffnung 6 des Aufnahmeteils 8 mindestens eine andersartige Hattezunge 38a vorgesehen, die sich in Umfangsrichtung und schräg radial nach außen erstreckt. Bevorzugt sind zwei solche Haltezungen 38a einander etwa diametral gegenüberliegend angeordnet, wobei sich diese zwei Haltezungen 38a in entgegengesetzte Umfangsrichtungen erstrecken (vgl. Fig. 16), um eine gute Verdrehsicherung in beiden Drehrichtungen zu gewährleisten. Wie sich aus Fig. 22 ergibt, können diese Haltezungen 38a zusätzlich derart um ihre Längsachse tordiert sein, dass sie mit einem Haltekanten-Eckbereich 26a gleichzeitig zur umfangsgemäßen und auch zur axialen Befestigung der Einpresspatrone 2 in der Anschlussöffnung 6 beitragen. Die Haltezungen 38a sichern als radial nach außen wirkende Sicherungsmittel das Halteteil 32 effektiv gegen Verdrehen in der Anschlussöffnung 6. Um auch ein Verdrehen der Einpresspatrone 2 innerhalb des ringförmigen Halteteils 32 auszuschließen, ist als radial nach innen wirkendes Sicherungsmittel bevorzugt innerhalb der Ringnut 36 des Einpressabschnittes 4 ein Ansatz 39 vorgesehen (siehe insbesondere Fig. 5, 7 und 9), wobei das Halteteil 32 mit seiner Umfangsunterbrechung 34 diesen Ansatz 39 so aufnimmt, dass in Umfangsrichtung praktisch eine spielfreie Verbindung gegeben ist. Somit wirkt das Halteteil 32 insgesamt vorteilhafterweise als Verdrehsicherung für die Einpresspatrone 2.

Alternativ zu der beschriebenen, bevorzugten Ausführung kann das Halteteil 32 zur Verdrehsicherung auch Haltezungen nach Art der Haltezungen 38a aufweisen, die aber derart tordiert bzw. gebogen sind, dass sie bereichsweise sowohl radial nach außen als auch radial nach innen wirken. Dabei kann sich dann eventuell der Ansatz 39 des Einpressabschnittes 4 erübrigen. Zudem kann das Halteteil 32 auch umfangsgemäß geschlossen, d. h. ohne die Unterbrechung 34 ausgebildet sein. Zur Halterung auf dem Einpressabschnitt 4 kann dabei das Halteteil 32 nach innen weisende Haltezungen aufweisen, die in eine Nut und/oder in die Außenumfangsfläche des Einpressabschnittes 4 eingreifen. Ferner kann das Halteteil 32 auch mehrteilig, z. B. aus zwei Halbschalen ausgebildet sein, die mit geeigneten Mitteln an der Einpresspatrone 2 und/oder gegeneinander fixiert, z. B. verrastet sind.

Im Interesse einer wirtschaftlichen Herstellung ist es vorteilhaft, wenn das Halteteil 32 derart aus einem ursprünglich beispielsweise im Querschnitt kreisförmigen Drahtmaterial zu einem flachen Querschnitt bzw. teil-hohlzylindrisch gewalzt ist, dass seine Randkanten natürliche Rundungsradien erhalten. Dadurch erübrigt sich ein separater Entgrat-Vorgang, der sinnvoll wäre, wenn das Halteteil aus einem flachen Blechmaterial ausgestanzt und dann gebogen werden würde. Die Haltezungen 38, 38a allerdings sind aus dem Halteteil 32 derart freigestanzt, dass im Bereich der Haftekanten 26 etwa radial nach außen gerichtete, scharfkantige Stanzgrate gebildet sind. Dies trägt zu einem sehr festen, formschlüssigen Verkrallen in der Anschlussöffnung 6 bei. Wie sich aus Fig. 23 ergibt, werden zunächst durch einen Stanzvorgang von innen nach außen in Richtung der eingezeichneten Pfeile 40 U-förmige, die Kontur der Haltezungen 38, 38a umgebende Taschen 42 ausgestanzt, wodurch ein entsprechend U-förmiger Stanzrest 44 anfällt, der in Fig. 23 geschnitten dargestellt ist. Durch diesen Stanzvorgang erhält somit jede Haltezunge 38, 38a nach außen gerichtete Stanzgrate. Erst an den Stanzvorgang anschließend werden die so frei gestanzten Haltezungen 38, 38a radial schräg nach außen gebogen (Pfeil 46 in Fig. 23).

Das Halteteil 32 kann grundsätzlich aber auch als Stanzbiegeteil aus Blech hergestellt werden. Dabei ist ein Entgraten optional, zumal eventuelle Grate durch die bevorzugte Verdrehsicherung unschädlich sind, weil durch Vermeidung von oszillierenden Bewegungen auch Beschädigungen der Einpresspatrone 2 durch Stanzgrate des Halteteils 32 vermieden werden. Es ist auch möglich, das Stanzbiegeteil vor dem radialen Ausbiegen der Haltezungen 38, 38a so zu entgraten, dass nur Grate an äußeren Randkanten entfernt werden, nicht aber im Bereich der Kanten der Haltezungen. Bei einem Trovalisier-Vorgang kann dies durch Verwendung von entsprechend großen Steinen (Schleifkörpern) erreicht werden, die durch ihre Größe nicht in die Bereiche der gestanzten Taschen 42 eingreifen können.

Bevorzugt weist das Halteteil 32 eine Anzahl von sechs bis fünfzehn, wie dargestellt insbesondere zwölf, Halteelementen 20 bzw. Haltezungen 38, 38a in gleichmäßiger, radialsymmetrischer Umfangsverteilung auf. Ferner weist das Halteteil 32 eine radiale Material-Dicke im Bereich von 0,2mm bis 0,6mm, insbesondere 0,4mm, auf. Die Unterbrechung 34 des im Übrigen ringförmigen Halteteils 32 - und somit entsprechend auch der korrespondierende Ansatz 39 in der Ringnut 36 der Einpresspatrone 2 - erstreckt sich über einen Winkel von maximal 30°, so dass das Halteteil 32 einen Umgreifungswinkel ≥330° aufweist. Dabei besteht das Halteteil 32 aus Federstahl, vorzugsweise rostfreiem Edelstahl, oder aus einer Beryllium-Verbindung, insbesondere Beryllium-Bronze.

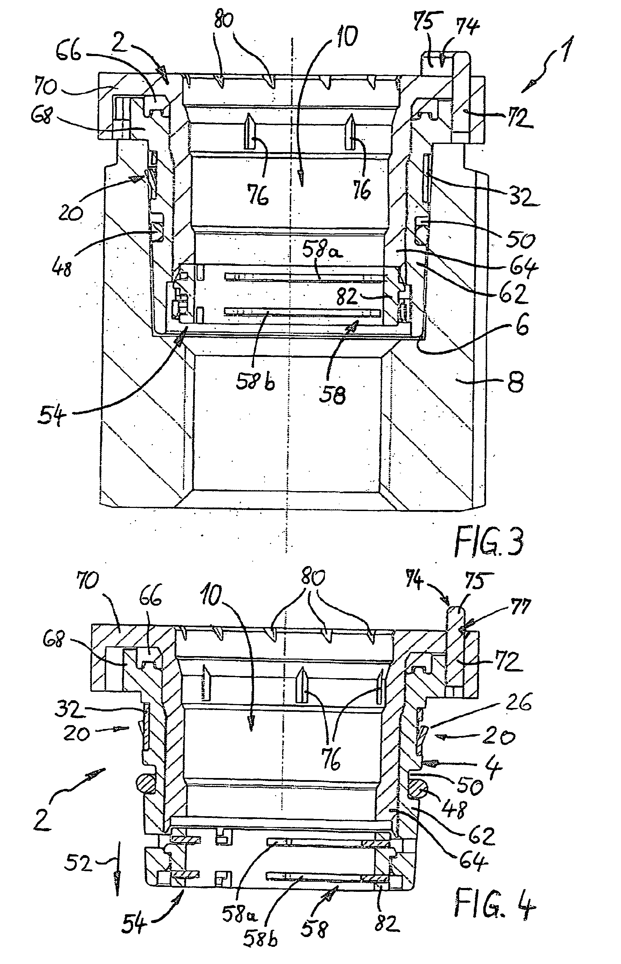

Zur Abdichtung der Einpresspatrone 2 innerhalb der Anschlussöffnung 6 trägt der Einpressabschnitt 4 auf seinem Außenumfang mindestens einen Dichtring 48 in einer äußeren Ringnut 50. Es ist vorteilhaft, wenn der Dichtring 48 - wie dargestellt - in einem den Halteelementen 20 bzw. dem Halteteil 32 mit den Haltezungen 38, 38a in Einsetzrichtung (siehe hierzu den Pfeil 52 z. B. in Fig. 4) vorgeordneten Bereich des Einpressabschnittes 4 angeordnet ist. Dadurch kann der mit dem Dichtring 48 zusammenwirkende Dichtbereich der Anschlussöffnung 6 beim Einsetzen der Einpresspatrone nicht von den Halteelementen 20 erreicht und beschädigt werden und bleibt daher vorteilhafterweise riefenfrei. Dadurch bleibt stets eine optimale Dichtwirkung gewährleistet. Zusätzlich zu der in Fig. 11 dargestellten Ausführung kann die Anschlussöffnung 6 einen kurzen zylindrischen Dichtflächenabschnitt (nicht dargestellt) im Anlagebereich des Dichtrings 48 aufweisen (insbesondere zum Toleranzausgleich).

Im folgenden werden noch einige Besonderheiten erläutert, die das Steckprinzip zum lösbaren Anschluss der Medienleitung bzw. des mit dieser verbundenen Steckerteils 14 sowie eine Halteeinrichtung 54 betreffen, die zum lösbaren Arretieren des Einsteckabschnittes 12 in seinem in die Stecköffnung 10 der Einpresspatrone 2 eingesteckten und umfangsgemäß über mindestens eine Dichtung 56 abgedichteten Zustand vorgesehen ist.

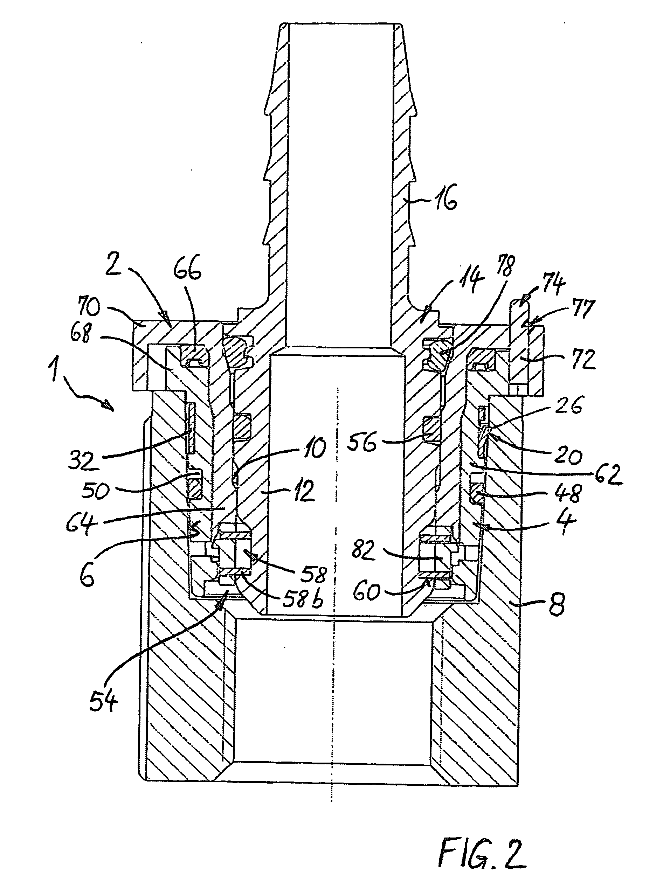

Bei der in den Fig. 1 bis 9 veranschaulichten Ausführungsform ist innerhalb der Einpresspatrone 2 ein radial elastisches Rastelement 58 zum formschlüssig rastenden Hintergreifen einer radialen Raststufe 60 des Einsteckabschittes 12 gelagert. Um ein Lösen des Steckerteils 14 aus seinem verrasteten Einsteckzustand zu ermöglichen, ist bei dieser Ausführung die Einpresspatrone 2 zweiteilig aus einem hülsenförmigen Außenteil 62 und einem koaxial in diesem sitzenden, hülsenförmigen Innenteil 64 ausgebildet. Die Einpresspatrone 2 ist über das den Einpressabschnitt 4 mit den Halteelementen 20 aufweisende Außenteil 62 unlösbar in die Anschlussöffnung 6 des Aufnahmeteils 8 einsetzbar, wobei das Innenteil 64 jedoch lösbar mit dem Außenteil 62 verbunden ist. Das Rastelement 58 ist hierbei derart zwischen Innenteil 64 und Außenteil 62 gelagert, dass es durch Lösen des Innenteils 64 aus dem Außenteil 62 zusammen mit dem verrasteten Einsteckabschnitt 12 des Steckerteils 14 entnehmbar ist. In der dargestellten, bevorzugten Ausführung sind das Außenteil 62 und das Innenteil 64 nach Art einer Bajonettverbindung miteinander verbunden. Ein zwischen dem Innenteil 64 und dem Außenteil 62 gebildeter Ringspatt ist über eine Dichtung 66 nach außen abgedichtet. Beide Teile 62, 64 weisen im Bereich der Mündungsseite 22 radiale, flanschartige Verbindungsabschnitte 68, 70 auf, wobei der Verbindungsabschnitt 68 des Außenteils 62 in den Verbindungsabschnitt 70 des Innenteils 64 eingreift. In diesem Bereich ist die Bajonettverbindung gebildet, wozu insbesondere auf Fig. 6 und 7 verwiesen wird. Dabei sind Mittel zur Sicherung des Innenteils 64 gegen ungewolltes Verdrehen relativ zu dem Außenteil 62 vorgesehen. Hierzu kann mindestens ein stiftartiges Sicherungselement 72 vorgesehen sein, welches sich lösbar axial durch korrespondierende Öffnungen der beiden Verbindungsabschnitte 68, 70 des Innenteils 64 und des Außenteils 62 erstreckt. Hierzu wird insbesondere auf die Darstellungen in Fig. 2 bis 4 (eingesteckte Sicherungsstellung) und Fig. 5, 6 und 8 (Lösestellung) verwiesen. Bei der dargestellten, bevorzugten Ausführung ist ein bügelartiges, U-förmiges Sicherungsteil 74 vorgesehen, dass mit seinen zwei Schenkeln zwei parallele Sicherungselemente 72 bildet, die über einen Verbindungssteg 75 verbunden sind. Der Verbindungssteg 75 dient als Handhabe zum Einstecken in die Sicherungsstellung sowie auch zum Lösen, indem in einen zwischen der Stirnoberfläche der Einpresspatrone 2 und dem aufliegenden Verbindungssteg 75 gebildeten Spalt 77 ein geeignetes Werkzeug, z. B. eine Schraubendreherklinge, eingesetzt werden kann, um damit den Verbindungssteg 75 mit den Sicherungseiementen 72 hochzuzichen. Zur Bildung des Spaltes 77 können im Anlagebereich von Verbindungssteg 75 und/oder Stimfläche der Einpresspatrone 2 Schrägen gebildet sein (siehe Fig. 2 und 4).

In weiterer vorteilhafter Ausgestaltung dieser Ausführungsform ist das Rastelement 58 derart als Doppelrastelement mit zwei axial beabstandeten Teilrastelementen 58a und 58b ausgebildet, dass der Einsteckabschnitt 12 einerseits in einer teilgesteckten Vorraststellung (siehe Fig. 1) und andererseits in einer ganz gesteckten und mediendicht abgedichteten Vollraststellung (Fig. 2) arretierbar ist. Gemäß Fig. 1 liegt in der Vorraststellung eine definiert begrenzte, insbesondere akustisch wahmehmbare Leckage vor, indem im Bereich der Dichtung 56 axiale Leckagepfade gebildet sind. Hierzu können innerhalb der Stecköffnung 10 über den Umfang verteilte radiale Vertiefungen 76 gebildet sein. Sofern das Steckerteil 14 zusätzlich noch eine Schmutzdichtung 78 im Bereich der Mündungsseite 22 aufweist, sind auch hier in der Vorraststellung nach Fig. 1 noch Leckagepfade gebildet. Dazu können im Mündungsbereich entsprechende radiale Vertiefungen 80 gebildet sein. Hierzu wird auch auf Fig. 3 bis 5 verwiesen.

Die Teilrastelemente 58a, 58b sind bevorzugt als metallische, flach teilringförmige Federklammem ausgebildet und in einem ringförmigen käfigartigen Aufnahmeteil 82 gehalten. Das Aufnahmeteil 82 besteht zweckmäßig aus Kunststoff.

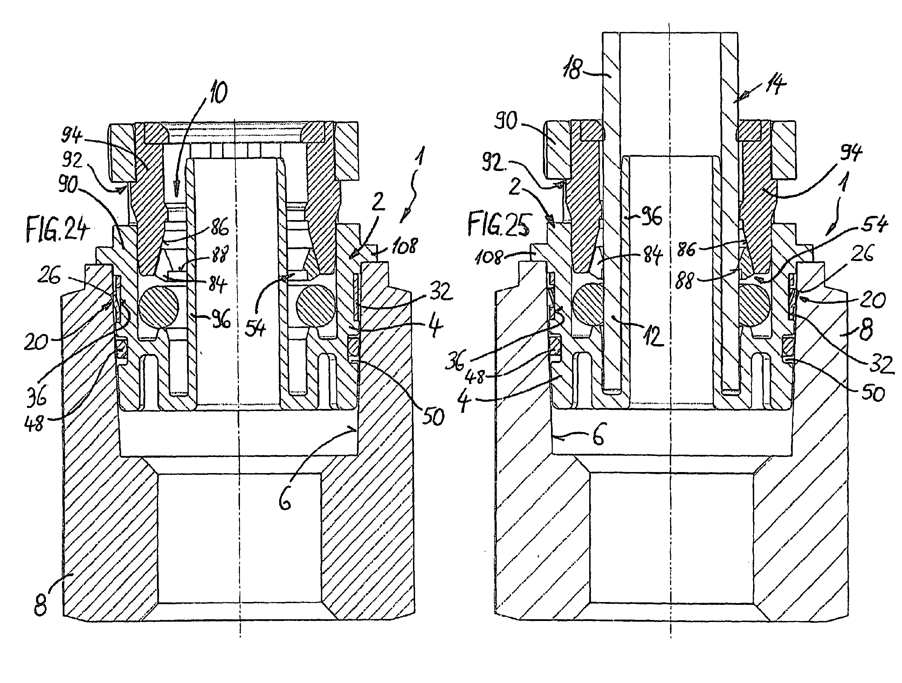

Was nun die Ausführungsform gemäß Fig. 24 und 25 betrifft, so handelt es sich um ein domloses Stecksystem, wobei die Medienleitung 18 mit einem Ende unmittelbar als Einsteckabschnitt 12 in die Stecköffnung 10 einsteckbar ist. Dabei ist innerhalb der Einpresspatrone 2 ein geschlitzter und dadurch radial verformbarer Klemmring 84 gelagert, der zum Arretieren des vom Ende der Medienleitung 18 gebildeten Einsteckabschnittes 12 mit einem innerhalb der Stecköffnung 10 vorgesehenen Innenkonus 86 so zusammenwirkt, dass nach dem Einstecken des Einsteckabschnittes 12 durch eine Zugbewegung in Löserichtung der Klemmring 84 kraftschlüssig mitgenommen und in den Innenkonus 86 hinein bewegt und dadurch radial verengt wird. Der Klemmring 84 wirkt dann mit mindestens einer radial nach innen weisenden Klemmkante 88 formschlüssig oder zumindest kraftformschlüssig gegen die glatte zylindrische Umfangsfläche des Einsteckabschittes 12. Um auch hierbei ein nachfolgendes Lösen des Steckerteils 14 bzw. der Medienleitung 18 zu ermöglichen, ist die Einpresspatrone 2 ebenfalls zweiteilig aus zwei lösbaren Teilen ausgebildet, und zwar aus einem den Einpressabschnitt 4 aufweisenden Gehäuseteil 90 und einem mit diesem über eine schnappbare und lösbare Formschlussverbindung 92 verbundenen und den Innenkonus 86 aufweisenden Einsatzteil 94. Innerhalb der Einpresspatrone 2 kann mit Vorteil eine sich axial erstreckende Stützhülse 96 zum kraftschlüssigen Eingriff in den eingesteckten Einsteckabschnitt 12 angeordnet sein. Wir dargestellt kann die Stützhülse 96 einstückig mit dem Gehäuseteil 90 ausgebildet oder alternativ als gesondertes Einzelteil beispielsweise eingepreßt sein.

Weitere Einzelheiten zu der Ausführung des Stecksystems gemäß Fig. 24 und 25 sind in der DE 195 10 193 A1 und der korrespondierenden EP 0 733 844 B1 sowie in der DE 202 14 847 U1 und der korrespondierenden WO 2004/029497A1 enthalten. Auf diese Veröffentlichungen wird daher an dieser Stelle in vollem Umfange Bezug genommen.

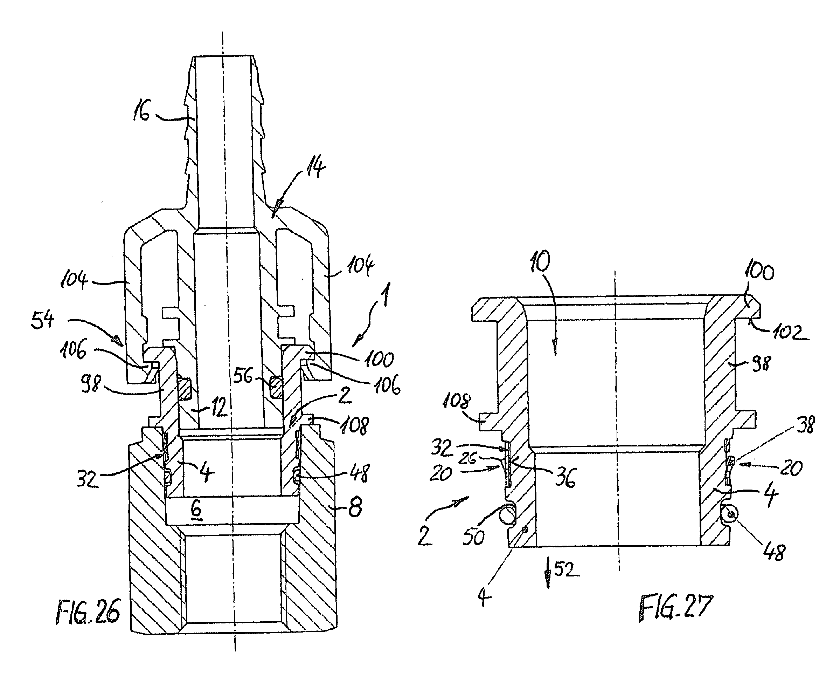

Was schließlich noch die Ausführung gemäß Fig. 26 und 27 betrifft, so weist die Einpresspatrone 2 an einem außerhalb des Aufnahmeteils 8 vorstehenden, hülsenförmigen Abschnitt 98 einen radial nach außen stehenden Haltesteg 100 mit einer unteren, in Richtung des Einpressabschnittes 4 weisenden radialen Haltekante 102 auf. Der hülsenförmige Abschnitt 98 bildet hierbei die eigentliche Stecköffnung 10, in die der Einsteckabschnitt 12 des Steckerteils 14 einsteckbar ist. Hierbei weist das Steckerteil 14 äußere Rastfederarme 104 auf, die sich axial in Einsteckrichtung erstrecken und an ihren freien, unteren Enden radial nach innen weisende Rastansätze 106 zum rastenden Über- und Hintergreifen der Haltekante 102 der Einpresspatrone 2 aufweisen. Zum Lösen des Steckerteils 14 können die Rastfederarme 104 radial nach außen gespreizt werden, bis die Rastansätze 106 die Haltekante 102 freigeben.

In allen Ausführungsformen besteht die Einpresspatrone 2 - abgesehen von dem metallischen Halteteil 32 - aus einem geeigneten Kunststoff, insbesondere aus einem faserverstärkten Polyamid. Das Kunststoffmaterial sollte vorzugsweise einen Faser- z. B. Glasfaser-Anteil von mindestens 25% enthalten, beispielsweise PA12+GF30 oder PA12+GF50.

Für viele Anwendungen ist es wesentlich, dass die Anschlussvorrichtung 1 relative Verdrehungen der angeschlossenen Medienleitung verhindert. Deshalb sind bevorzugt (in den Zeichnungen nicht erkennbare) Mittel zur Sicherung des Steckerteils 14 gegen Verdrehen relativ zu der - ihrerseits auch über das Halteteil 32 drehfest relativ zu dem Aufnahmeteil 8 fixierten - Einpresspatrone 2 vorgesehen.

Weiterhin weist die Einpresspatrone 2 außenseitig ein Anschlagelement 108 derart auf, dass dieses zur definierten Einsetzbegrenzung des Einpressabschnittes 4 zur Auflage auf dem Aufnahmeteil 8 gelangt. Im Falle der Ausführung gemäß Fig. 1 bis 9 fungiert zumindest der Verbindungsabschnitt 68 des Außenteils 62, eventuell auch der Verbindungsabschnitt 70 des Innenteils 64, als Anschlagelement.

## Patentansprüche

1. Anschlussvorrichtung (1) für Medienleitungen (18), bestehend aus einer Einpresspatrone (2), die mit einem Einpressabschnitt (4) in eine Anschlussöffnung (6) eines Aufnahmeteils (8) einsetzbar ist, wobei der Einpressabschnitt (4) auf seinem Außenumfang widerhakenartige Halteelemente (20) zum form- oder kraftformschlüssigen Verkrallen in der Anschlussöffnung (6) des Aufnahmeteils (8) aufweist, wobei die Halteelemente (20) als Bestandteile eines metallischen, ringförmigen und in einer Ringnut (36) des Einpressabschnittes (4) sitzenden Halteteils (32) ausgebildet sind, und wobei radial nach innen zwischen dem ringförmigen Halteteil (32) und der Einpresspatrone (2) wirkende Sicherungsmittel zur Sicherung der Einpresspatrone (2) gegen ein relatives Verdrehen innerhalb des Halteteils (32) vorhanden sind,
**dadurch gekennzeichnet, dass** zusätzlichzudenradialnach innen wirkend Sicherungsmitteln auch radial nach außen wirkende Sicherungsmittel (38a) vorgesehen sind, die das Halteteil (32) gegen Verdrehen in der Anschlussöffnung (6) sichern, so dass insgesamt Sicherungsmittel zur Sicherung der Einpresspatrone (2) gegen Verdrehungen relativ zu dem Aufnahmeteil (8) vorhanden sind.

2. Anschlussvorrichtung nach Anspruch 1,
**dadurch gekennzeichnet, dass** das Halteteil an einer Umfangsstelle eine durchgehende Unterbrechung (34) aufweist.

3. Anschlussvorrichtung nach Anspruch 1 oder 2,
**dadurch gekennzeichnet, dass** das Halteteil (32) als im Wesentlichen zylindrisches Blechformteil ausgebildet ist, wobei die Halteelemente (20) als freigeschnittene und schräg nach außen gebogene Haltezungen (38, 38a) ausgebildet sind.

4. Anschlussvorrichtung nach Anspruch 3,
**dadurch gekennzeichnet, dass** das Blechformteil als radial nach außen wirkendes Sicherungsmittel mindestens eine Haltezunge (38a) aufweist, die sich in Umfangsrichtung und schräg radial nach außen erstreckt.

5. Anschlussvorrichtung nach Anspruch 4,
**dadurch gekennzeichnet, dass** das Blechformteil als radial nach außen wirkende Sicherungsmittel zwei einander etwa diametral gegenGberliegend angeordnete und sich in entgegengesetzte Umfangsrichtungen erstreckende Haltezungen (38a) aufweist.

6. Anschlussvorrichtung nach einem der Ansprüche 2 bis 5,
**dadurch gekennzeichnet, dass** als radial nach innen wirkendes Sicherungsmittel innerhalb der Ringnut (36) des Einpressabschnittes (4) ein Ansatz (39) angeordnet ist, wobei das Halteteil (32) mit seiner Umfange Unterbrechung (34) den Ansatz (39) aufnimmt.

7. Anschlussvorrichtung nach einem der Ansprüche 1 bis 6,
**dadurch gekennzeichnet, dass** das Halteteil (32) zur Verdrehsicherung derart tordierte, gebogene Haltezungen aufweist, dass diese bereichsweise sowohl radial nach außen als auch radial nach innen wirken.

8. Anschlussvorrichtung nach einem der Ansprüche 1 bis 7,
**dadurch gekennzeichnet, dass** das Halteteil (32) derart aus einem Drahtmaterial gewalzt ist, dass seine Randkanten natürliche RundungsRadien aufweisen.

9. Anschlussvorrichtung nach einem der Ansprüche 3 bis 8,
**dadurch gekennzeichnet, dass** dieHaltezungen(38,38a) derart aus dem Halteteil (32) freigestanzt sind, dass zumindest im Bereich von äußeren Haftekanten (26) etwa radial nach außen gerichtete Stanzgrate gebildet sind.

10. Anschlussvorrichtung nach einem der Ansprüche 1 bis 9,
**dadurch gekennzeichnet, dass** das Halteteil (32) eine Anzahl von sechs bis fünfzehn Halteelementen (20) insbesondere in gleichmäßiger, radialsymmetrischer Umfangsverteilung aufweist.

11. Anschlussvorrichtung nach einem der Ansprüche 1 bis 10,
**dadurch gekennzeichnet, dass** das Halteteil (32) eine radiale Material-Dicke im Bereich von 0,2mm bis 0,6mm, insbesondere 0,4mm, aufweist.

12. Anschlussvorrichtung nach einem der Ansprüche 1 bis 11,
**dadurch gekennzeichnet, dass** die Unterbrechung (34) des ringförmigen Halteteils (32) sich über einen Winkel von bis zu 30° erstreckt, so dass das Halteteil (32) einen Umgreifungswinkel größer/gleich 330° aufweist.

13. Anschlussvorrichtung nach einem der Ansprüche 1 bis 12,
**dadurch gekennzeichnet, dass** das Halteteil (32) aus Federstahl, vorzugsweise rostfreiem Stahl oder aus einer Beryllium-Legierung, insbesondere Beryllium-Bronze, besteht.

14. Anschlussvorrichtung nach einem der Ansprüche 1 bis 13,
**dadurch gekennzeichnet, dass** die Anschtussöffnung (6) des Aufnahmeteils (8) zu ihrer äußeren Mündungsseite (22) hin leicht konisch erweitert ausgebildet ist.

15. Anschlussvorrichtung nach Anspruch 14,
**dadurch gekennzeichnet, dass** die Anschlussöffnung (6) sich mit einem Konuswinkel (α) etwa im Bereich von 1° bis 6°, insbesondere etwa 4,5°, erweitert.

16. Anschlussvorrichtung nach Anspruch 14 oder 15,
**dadurch gekennzeichnet, dass** die leicht konische Anschlussöffiung (6) im Wirkbereich der Halteelemente (20) des eingesetzten Einpressabschnittes (4) der Einpresspatrone (2) einen zylindrisch ausgebildeten Halteflächenabschnitt (24) aufweist.

17. Anschlussvorrichtung nach Anspruch 16,
**dadurch gekennzeichnet, dass** der zylindrische Halteflächenabschnitt (24) eine kurze axiale Länge (L) aufweist, die etwa im Bereich von 0,5mm bis 4mm, insbesondere 1,5mm bis 2,5mm, liegt.

18. Anschlussvorrichtung nach Anspruch 16 oder 17,
**dadurch gekennzeichnet, dass** im eingesetzten Zustand des Einpressabschnittes (4) die Halteelemente (20) derart mit ihren äußeren Haltekanten (26) im Bereich des zylindrischen Halteflächenabschnittes (24) zum verkrallenden Eingriff gelangen, dass zwischen den Haltekanten (26) und dem mündungsseitigen Ende (28) des zylindrischen Halteflächenabschnittes (24) ein axialer Abstand (x) vorhanden ist, der mindestens 0,5mm beträgt.

19. Anschlussvorrichtung nach einem der Ansprüche 16 bis 18,
**dadurch gekennzeichnet. dass** der zylindrische Halteflächenabschnitt (24) durch eine radiale Ausnehmung in der konischen Innenfläche der Anschlussöffnung (6) gebildet ist, wobei vorzugsweise der Halteflächenabschnitt (24) einerseits zur Mündungsseite (22) hin mit gleichem Innendurchmesser und anderseits gegenüberliegend über eine radiale, den Innendurchmesser reduzierende Stufenfläche (30) in die konische Innenfläche der Anschlussöffnung (6) übergeht.

20. Anschlussvorrichtung nach einem der Ansprüche 16 bis 18,
**dadurch gekennzeichnet, dass** der zylindrische Halteflächenabschnitt (24) in beiden axialen Richtungen in mit jeweils gleichem Innendurchmesser angrenzende konische Innenflächenabschnitte (6a, 6b) der Anschlussöffnung (6) übergeht, wobei die konischen Innenflächen (6a, 6b) den gleichen oder unterschiedliche Konuswinkel (α) aufweisen.

21. Anschlussvorrichtung nach einem der Ansprüche 1 bis 20,
**dadurch gekennzeichnet, dass** der Einpressabschnitt (4) der Einpresspatrone (2) auf seinem Außenumfang in einem den Halteelementen (20) vorzugsweise in Einsetzrichtung (52) vorgeordneten Bereich mindestens einen Dichtring (48) trägt, wobei vorzugsweise innerhalb der Anschlussöffnung (6) im Bereich des Dichtringes (48) ein kurzer zylindrischer Dichtflächenbereich vorgesehen ist.

22. Anschlussvorrichtung nach einem der Ansprüche 1 bis 21,
**dadurch gekennzeichnet, dass** dieEinpresspatrone (2) als Steckkupplungsteil zum lösbaren Anschluss einer Medienleitung ausgebildet ist.

23. Anschlussvorrichtung nach einem der Ansprüche 1 bis 22,
**dadurch gekennzeichnet, dass** dieEinpresspatrone (2) als Muffenteil mit einer Stecköffnung (10) zur Aufnahme eines Steckabschnittes (12) eines mit der Medienleitung verbundenen bzw. verbindbaren Steckerteils (14) ausgebildet ist.

24. Anschlussvorrichtung nach Anspruch 23,
**gekennzeichnet durch** eine Halteeinrichtung (54) zum lösbaren Arretieren des Einsteckabschnittes (12) in seinem in die Stecköffnung (10) eingesteckten und umfangsgemäß über eine Dichtung (56) abgedichteten Zustand.

25. Anschlussvorrichtung nach Anspruch 23 oder 24,
**dadurch gekennzeichnet, dass** innerhalb der Einpresspatrone (2) ein radial elastisches Rastelement (58) zum formschlüssig rastenden Hintergreifen einer radialen Raststufe (60) des Einsteckabschnittes (12) gelagert ist.

26. Anschlussvorrichtung nach Anspruch 25,
**dadurch gekennzeichnet, dass** die Einpresspatrone (2) zweiteilig aus einem hülsenförmigen Außenteil (62) und einem koaxial in diesem sitzenden, hülsenförmigen Innenteil (64) besteht, wobei die Einpresspatrone (2) über das Außenteil (62) unlösbar in die Anschlussöffnung (6) des Aufnahmeteils (8) einsetzbar ist, wobei das Innenteil (64) lösbar mit dem Außenteil (62) verbunden ist, und wobei das Rastelement (58) derart gelagert ist, dass es durch Lösen des Innenteils (64) aus dem Außenteil (62) entnehmbar ist.

27. Anschlussvorrichtung nach Anspruch 26,
**dadurch gekennzeichnet, dass** das Außenteil (62) und das Innenteil (64) nach Art einer Bajonettverbindung miteinander verbunden sind.

28. Anschlussvorrichtung nach Anspruch 26 oder 27,
**dadurch gekennzeichnet, dass** einRingspattzwischendem Innenteil (64) und dem Außenteil (62) über eine Dichtung (66) nach außen abgedichtet ist.

29. Anschlussvorrichtung nach einem der Ansprüche 26 bis 28,
**dadurch gekennzeichnet, dass** das Innenteil (64) und das Außenteil (62) im Bereich von flanschartigen Verbindungsabschnitten (68, 70) verbunden sind.

30. Anschlussvorrichtung nach einem der Ansprüche 26 bis 29,
**gekennzeichnet durch** Mittel zur Sicherung des Innenteils (64) gegen ungewolltes Verdrehen relativ zu dem Außenteil (62).

31. Anschlussvorrichtung nach Anspruch 29 order 30,
**gekennzeichnet durch** mindestens ein stiftartiges, sich lösbar durch korrespondierende Öffnungen der beiden Verbindungsabschnitte (68, 70) des Innenteils (64) und des Außenteils (62) erstreckendes Sicherungselement (72).

32. Anschlussvorrichtung nach einem der Ansprüche 25 bis 31,
**dadurch gekennzeichnet, dass** das Rastefement (58) derart als Doppelrastelement mit zwei axial beabstandeten Teilrastelementen (58a, 58b) ausgebildet ist, dass der Einsteckabschnitt (12) einerseits in einer teilgesteckten Vorraststellung und andererseits in einer ganz gesteckten und mediendicht abgedichteten Vollraststellung arretierbar ist, wobei in der Vorraststellung eine definiert begrenzte, insbesondere akustisch wahrnehmende Leckage vorliegt.

33. Anschlussvorrichtung nach Anspruch 32,
**dadurch gekennzeichnet, dass** die Teilrastelemente (58a, 58b) als metallische Federklammern ausgebildet und in einem ringförmigen, käfigartigen Aufnahmeteil (82) gehalten sind.

34. Anschlussvorrichtung nach einem der Ansprüche 23 oder 24,
**dadurch gekennzeichnet, dass** innerhalb der Einpresspatrone (2) ein geschlitzter und dadurch radial verformbarer Klemmring (84) gelagert ist, der zum Arretieren des insbesondere von einem Ende einer Medienleitungen (18) gebildeten Einsteckabschnittes (12) mit einem innerhalb der Stecköffnung (10) vorgesehenen Innenkonus (86) zusammenwirkt.

35. Anschlussvorrichtung nach Anspruch 34,
**dadurch gekennzeichnet, dass** die Einpresspatrone (2) zweiteilig aus einem den Einpressabschnitt (4) aufweisenden Gehäuseteil (90) und einem mit diesem über eine schnappbare und lösbare Formschlussverbindung (92) verbundenen und den Innenkonus (86) aufweisenden Einsatzteil (94) besteht.

36. Anschiussvorrichtung nach Anspruch 34 oder 35,
**dadurch gekennzeichnet, dass** innerhalb der Einpresspatrone (2) eine sich axial erstreckende Stützhülse (96) zum kraftschlüssigen Eingriff in den eingesteckten Einsteckabschnitt (12) angeordnet ist.

37. Anschlussvorrichtung nach Anspruch 23 oder 24,
**dadurch gekennzeichnet, dass** die Einpresspatrone (2) an einem außerhalb des Aufnahmeteils (8) vorstehenden Abschnitt (98) eine radial nach außen gerichtete Haltekante (102) aufweist, wobei das Steckerteil (14) äußere, radial elastische Rastfederarme (104) mit radial nach innen weisenden Rastansätzen (106) zum rastenden Über- und Hintergreifen der Haltekante (102) der Einpresspatrone (2) aufweist.

38. Anschlussvorrichtung nach einem der Ansprüche 1 bis 37,
**dadurch gekennzeichnet, dass** die Einpresspatrone (2) aus Kunststoff, insbesondere aus einem faserverstärkten Polyamid, besteht.

39. Anschlussvorrichtung nach einem der Ansprüche 23 bis 38,
**gekennzeichnet durch** Mittel zur Sicherung des Steckerteils (14) gegen Verdrehen relativ zu der Einpresspatrone (2).

40. Anschlussvorrichtung nach einem der Ansprüche 1 bis 39, **gekennzeichnet durch** ein Anschlagelement (108) zur definierten Einsetzbegrenzung des Einpressabschnittes (4) **durch** Anlage an dem Aufnahmeteil (8).

## Claims

1. A connecting device (1) for media lines (18), consisting of a press-in cartridge (2) which can be inserted with a press-in section (4) into a connection opening (6) of a receiving part (8), the press-in section (4) having on its outer periphery barb-like holding elements (20) for form-locked or force-locked and form-locked claw-like gripping in the connection opening (6) of the receiving part (8), the holding elements (20) being formed as constituents of a metallic, annular holding part (32) which is seated in an annular groove (36) of the press-in section (4), and wherein
securing means which act radially inwards between the annular holding part (32) and the press-in cartridge (2) for securing the press-in cartridge (2) against relative turning within the holding part (32) are present,
**characterised in that** in addition to the securing means which act radially inwards also securing means (38a) which act radially outwards are provided, which means secure the holding part (32) against turning in the connection opening (6), so that overall securing means for securing the press-in cartridge (2) against turning relative to the receiving part (8) are present.

2. A connecting device according to Claim 1,
**characterised in that** the holding part has a continuous interruption (34) at a peripheral point.

3. A connecting device according to Claim 1 or 2,
**characterised in that** the holding part (32) is formed as a substantially cylindrical shaped sheet metal part, the holding elements (20) being formed as holding tongues (38, 38a) which are cut free and bent obliquely outwards.

4. A connecting device according to Claim 3,
**characterised in that** the shaped sheet metal part has as securing means which acts radially outwards at least one holding tongue (38a) which extends in the peripheral direction and obliquely radially outwards.

5. A connecting device according to Claim 4,
**characterised in that** the shaped sheet metal part has as securing means which acts radially outwards two holding tongues (38a) which are arranged approximately diametrically opposite each other and extend in opposite peripheral directions.

6. A connecting device according to one of Claims 2 to 5,
**characterised in that** as securing means which acts radially inwards a projection (39) is arranged within the annular groove (36) of the press-in section (4), the holding part (32) receiving the projection (39) with its peripheral interruption (34).

7. A connecting device according to one of Claims 1 to 6,
**characterised in that** the holding part (32), for securing against rotation, has holding tongues which are twisted and bent such that in regions they act both radially outwards and radially inwards.

8. A connecting device according to one of Claims 1 to 7,
**characterised in that** the holding part (32) is rolled from a wire material such that its marginal edges have natural rounding radii.

9. A connecting device according to one of Claims 3 to 8,
**characterised in that** the holding tongues (38, 38a) are punched free from the holding part (32) such that, at least in the region of outer holding edges (26), punching burrs which are directed approximately radially outwards are formed.

10. A connecting device according to one of Claims 1 to 9,
**characterised in that** the holding part (32) has a number of six to fifteen holding elements (20) in particular in a uniform, radially symmetrical peripheral distribution.

11. A connecting device according to one of Claims 1 to 10,
**characterised in that** the holding part (32) has a radial material thickness in the range from 0.2 mm to 0.6 mm, in particular 0.4 mm.

12. A connecting device according to one of Claims 1 to 11,
**characterised in that** the interruption (34) in the annular holding part (32) extends over an angle of up to 30°, so that the holding part (32) has an encompassing angle of greater than/equal to 330°.

13. A connecting device according to one of Claims 1 to 12,
**characterised in that** the holding part (32) consists of spring steel, preferably stainless steel, or of a beryllium alloy, in particular beryllium bronze.

14. A connecting device according to one of Claims 1 to 13,
**characterised in that** the connection opening (6) of the receiving part (8) is formed slightly conically widened towards its outer mouth side (22).

15. A connecting device according to Claim 14,
**characterised in that** the connection opening (6) widens with a cone angle (α) approximately in the range from 1° to 6°, in particular about 4.5°.

16. A connecting device according to Claim 14 or 15,
**characterised in that** the slightly conical connection opening (6) in the region of action of the holding elements (20) of the inserted press-in section (4) of the press-in cartridge (2) has a cylindrically formed holding-surface section (24).

17. A connecting device according to Claim 16,
**characterised in that** the cylindrical holding-surface section (24) has a short axial length (L) which lies approximately in the range from 0.5 mm to 4 mm, in particular 1.5 mm to 2.5 mm.

18. A connecting device according to Claim 16 or 17,
**characterised in that** in the inserted state of the press-in section (4) the holding elements (20) come to engage in claw-like manner with their outer holding edges (26) in the region of the cylindrical holding-surface section (24) such that an axial distance (x) of at least 0.5 mm is present between the holding edges (26) and the mouth-side end (28) of the cylindrical holding-surface section (24).

19. A connecting device according to one of Claims 16 to 18,
**characterised in that** the cylindrical holding-surface section (24) is formed by a radial cutout in the conical inner surface of the connection opening (6), with preferably the holding-surface section (24), on one hand towards the mouth side (22) with the same internal diameter and on the other hand located opposite via a radial stepped surface (30) which reduces the internal diameter, merging into the conical inner surface of the connection opening (6).

20. A connecting device according to one of Claims 16 to 18,
**characterised in that** the cylindrical holding-surface section (24) in both axial directions merges into conical inner-surface sections (6a, 6b) of the connection opening (6) which adjoin with an identical internal diameter in each case, the conical inner surfaces (6a, 6b) having the same or different cone angle(s) (α).

21. A connecting device according to one of Claims 1 to 20,
**characterised in that** the press-in section (4) of the press-in cartridge (2) bears on its outer periphery, in a region preferably preceding the holding elements (20) in the direction of insertion (52), at least one sealing ring (48), with a short cylindrical sealing-surface region being provided preferably within the connection opening (6) in the region of the sealing ring (48).

22. A connecting device according to one of Claims 1 to 21,
**characterised in that** the press-in cartridge (2) is formed as a plug-in coupling part for detachable connection of a media line.

23. A connecting device according to one of Claims 1 to 22,
**characterised in that** the press-in cartridge (2) is formed as a sleeve part with a plugging opening (10) for receiving a plugging section (12) of a plug part (14) which is or can be connected to the media line.

24. A connecting device according to Claim 23,
**characterised by** a holding means (54) for detachable locking of the insertion section (12) in its state inserted into the plugging opening (10) and sealed at the periphery via a seal (56).

25. A connecting device according to Claim 23 or 24,
**characterised in that** a radially elastic latch element (58) for form-locked latching engaging behind a radial latch step (60) of the insertion section (12) is mounted within the press-in cartridge (2).

26. A connecting device according to Claim 25,
**characterised in that** the press-in cartridge (2) consists in two parts of a sleeve-shaped outer part (62) and a sleeve-shaped inner part (64) seated coaxially therein, the press-in cartridge (2) being able to be inserted via the outer part (62) non-detachably into the connection opening (6) of the receiving part (8), the inner part (64) being connected detachably to the outer part (62), and the latch element (58) being mounted such that it can be removed from the outer part (62) by detaching the inner part (64).

27. A connecting device according to Claim 26,
**characterised in that** the outer part (62) and the inner part (64) are connected together in the manner of a bayonet connection.

28. A connecting device according to Claim 26 or 27,
**characterised in that** an annular gap between the inner part (64) and the outer part (62) is sealed off from the outside by means of a seal (66).

29. A connecting device according to one of Claims 26 to 28,
**characterised in that** the inner part (64) and the outer part (62) are connected in the region of flange-like connection sections (68, 70).

30. A connecting device according to one of Claims 26 to 29,
**characterised by** means for securing the inner part (64) against unwanted turning relative to the outer part (62).

31. A connecting device according to Claim 29 or 30,
**characterised by** at least one pin-like securing element (72) which extends detachably through corresponding openings in the two connection sections (68, 70) of the inner part (64) and the outer part (62).

32. A connecting device according to one of Claims 25 to 31,
**characterised in that** the latch element (58) is formed as a double latch element with two axially spaced-apart partial latch elements (58a, 58b) such that the insertion section (12) can be locked on one hand in a partially inserted pre-latching position and on the other hand in a fully inserted full latch position which is sealed to be media-tight, with a definedly limited, in particular acoustically perceiving [sic] leakage being present in the pre-latching position.

33. A connecting device according to Claim 32,
**characterised in that** the partial latch elements (58a, 58b) are formed as metallic spring clamps and are held in an annular, cage-like receiving part (82).

34. A connecting device according to one of Claims 23 or 24,
**characterised in that** a slotted and thereby radially deformable clamping ring (84) is mounted within the press-in cartridge (2), which ring for locking the insertion section (12) formed in particular by one end of a media lines [sic] (18) cooperates with an internal cone (86) provided within the plugging opening (10).

35. A connecting device according to Claim 34,
**characterised in that** the press-in cartridge (2) consists in two parts of a casing part (90) having the press-in section (4) and an insert part (94) being connected to said casing part via a snap-in and detachable form-locking connection (92) and having the internal cone (86).

36. A connecting device according to Claim 34 or 35,
**characterised in that** an axially extending supporting sleeve (96) for the force-locking engagement in the inserted insertion section (12) is arranged within the press-in cartridge (2).

37. A connecting device according to Claim 23 or 24,
**characterised in that** the press-in cartridge (2) on a section (98) projecting outside the receiving part (8) has a holding edge (102) directed radially outwards, the plug part (14) having outer, radially elastic latch spring arms (104) with latch shoulders (106) facing radially inwards for latching engagement over and behind the holding edge (102) of the press-in cartridge (2).

38. A connecting device according to one of Claims 1 to 37,
**characterised in that** the press-in cartridge (2) is made of plastics material, in particular of a fibre-reinforced polyamide.

39. A connecting device according to one of Claims 23 to 38,
**characterised by** means for securing the plug part (14) against turning relative to the press-in cartridge (2).

40. A connecting device according to one of Claims 1 to 39,
**characterised by** a stop element (108) for defined limiting of insertion of the press-in section (4) by resting against the receiving part (8).

## Revendications

1. Dispositif de raccordement (1) pour des conduites de fluide (18), formé par une cartouche d'enfichage (2), qui est destinée à être insérée avec une partie d'enfichage (4) dans une ouverture de raccordement (6) d'une partie formant logement (8), ladite partie d'enfichage (4) comportant sur sa périphérie extérieure des éléments de fixation (20) en forme de crochets destinés à s'agripper par conjugaison de forme et par force dans l'ouverture de raccordement (6) de la partie formant logement (8), lesdits éléments de fixation (20) étant réalisés sous forme de parties intégrantes d'une partie de fixation (32) métallique annulaire et posée dans une rainure annulaire (36) de la partie d'enfichage (4), et des moyens d'immobilisation, agissant radialement vers l'intérieur et destinés à immobiliser la cartouche d'enfichage (2) contre toute rotation relative à l'intérieur de la partie de fixation (32), étant présents entre la partie de fixation (32) annulaire et la cartouche d'enfichage (2),
**caractérisé en ce que**, en plus des moyens d'immobilisation agissant radialement vers l'intérieur, sont aussi prévus des moyens d'immobilisation (38a) agissant radialement vers l'extérieur, lesquels immobilisent la partie de fixation (32) contre toute rotation dans l'ouverture de raccordement (6), de telle sorte que sont présents dans l'ensemble des moyens d'immobilisation destinés à immobiliser la cartouche d'enfichage (2) contre toute rotation par rapport à la partie formant logement (8).

2. Dispositif de raccordement selon la revendication 1, **caractérisé en ce que** la partie de fixation comporte un intervalle (34) continu à un emplacement de sa périphérie.

3. Dispositif de raccordement selon la revendication 1 ou 2, **caractérisé en ce que** la partie de fixation (32) est réalisée sous la forme d'un élément profilé en tôle sensiblement cylindrique, les éléments de fixation (20) étant réalisés sous la forme de languettes de fixation (38, 38a) découpées et courbées en oblique vers l'extérieur.

4. Dispositif de raccordement selon la revendication 3, **caractérisé en ce que** l'élément profilé en tôle comporte au moins une languette de fixation (38a) formant un moyen d'immobilisation agissant radialement vers l'extérieur, laquelle s'étend dans la direction circonférentielle et en oblique radialement vers l'extérieur.

5. Dispositif de raccordement selon la revendication 4, **caractérisé en ce que** l'élément profilé en tôle comporte deux languettes de fixation (38a) formant des moyens d'immobilisation agissant radialement vers l'extérieur, lesquelles sont diamétralement opposées et s'étendent dans des directions circonférentielles opposées.

6. Dispositif de raccordement selon l'une quelconque des revendications 2 à 5, **caractérisé en ce qu'**une saillie (39), formant un moyen d'immobilisation agissant radialement vers l'intérieur, est disposée à l'intérieur de la rainure annulaire (36) de la partie d'enfichage (4), la partie de fixation (32) recevant la saillie (39) dans son intervalle (34) périphérique.

7. Dispositif de raccordement selon l'une quelconque des revendications 1 à 6, **caractérisé en ce que** la partie de fixation (32) pour empêcher tout mouvement de rotation comporte des languettes de fixation courbes vrillées, de telle sorte qu'elles agissent par zones tant radialement vers l'extérieur que radialement vers l'intérieur.

8. Dispositif de raccordement selon l'une quelconque des revendications 1 à 7, **caractérisé en ce que** la partie de fixation (32) est laminée dans un fil, de telle sorte que ses bords longitudinaux comportent des rayons de courbure naturels.

9. Dispositif de raccordement selon l'une quelconque des revendications 3 à 8, **caractérisé en ce que** les languettes de fixation (38, 38a) sont découpées dans la partie de fixation (32) de telle sorte qu'au moins dans la zone des bords de fixation (26) extérieurs, se forment des arêtes de découpe orientées sensiblement radialement vers l'extérieur.

10. Dispositif de raccordement selon l'une quelconque des revendications 1 à 9, **caractérisé en ce que** la partie de fixation (32) comporte un nombre de six à quinze éléments de fixation (20), répartis en particulier uniformément sur la périphérie selon une symétrie radiale.

11. Dispositif de raccordement selon l'une quelconque des revendications 1 à 10, **caractérisé en ce que** la partie de fixation (32) a une épaisseur radiale dans une plage de 0,2 mm à 0,6 mm, en particulier de 0,4 mm.

12. Dispositif de raccordement selon l'une quelconque des revendications 1 à 11, **caractérisé en ce que** l'intervalle (34) de la partie de fixation (32) annulaire s'étend sur un angle allant jusqu'à 30°, de telle sorte que la partie de fixation (32) possède un angle d'enserrement supérieur ou égal à 330°.

13. Dispositif de raccordement selon l'une quelconque des revendications 1 à 12, **caractérisé en ce que** la partie de fixation (32) est réalisée en acier à ressort, de préférence en acier inoxydable ou dans un alliage au béryllium, en particulier du bronze au béryllium.

14. Dispositif de raccordement selon l'une quelconque des revendications 1 à 13, **caractérisé en ce que** l'ouverture de raccordement (6) de la partie formant logement (8) est réalisée en s'élargissant légèrement sous forme conique vers son côté d'embouchure (22) extérieur.

15. Dispositif de raccordement selon la revendication 14, **caractérisé en ce que** l'ouverture de raccordement (6) s'élargit avec un angle de cône (α) situé sensiblement dans une plage de 1° à 6°, en particulier 4,5° environ.

16. Dispositif de raccordement selon la revendication 14 ou 15, **caractérisé en ce que** l'ouverture de raccordement (6) légèrement conique comporte une surface de fixation (24) cylindrique dans la zone d'action des éléments de fixation (20) de la partie d'enfichage (4) insérée de la cartouche d'enfichage (2).

17. Dispositif de raccordement selon la revendication 16, **caractérisé en ce que** la surface de fixation (24) cylindrique a une courte longueur axiale (L) qui se situe sensiblement dans une plage de 0,5 mm à 4 mm, en particulier 1,5 mm à 2,5 mm.

18. Dispositif de raccordement selon la revendication 16 ou 17, **caractérisé en ce que**, dans la position insérée de la partie d'enfichage (4), les éléments de fixation (20) s'agrippent avec leurs bords de fixation (26) extérieurs dans la zone de la surface de fixation (24) cylindrique, de telle sorte qu'entre les bords de fixation (26) et l'extrémité (28) du côté embouchure de la surface de fixation (24) cylindrique se forme une distance axiale (x) qui mesure au moins 0,5 mm.

19. Dispositif de raccordement selon l'une quelconque des revendications 16 à 18, **caractérisé en ce que** la surface de fixation (24) cylindrique est formée par un évidement radial dans la face intérieure conique de l'ouverture de raccordement (6), dans lequel, de préférence, la surface de fixation (24) se prolonge, d'une part, avec le même diamètre intérieur vers le côté d'embouchure (22) et, d'autre part, sur l'autre côté, par la face intérieure conique de l'ouverture de raccordement (6) par l'intermédiaire d'un décrochement (30) diminuant le diamètre intérieur.

20. Dispositif de raccordement selon l'une quelconque des revendications 16 à 18, **caractérisé en ce que** la surface de fixation (24) cylindrique se prolonge dans les deux directions axiales par des surfaces intérieures (6a, 6b) coniques de l'ouverture de raccordement (6), adjacentes et respectivement de même diamètre intérieur, les surfaces intérieures (6a, 6b) coniques ayant un angle de cône (α) identique ou différent.

21. Dispositif de raccordement selon l'une quelconque des revendications 1 à 20, **caractérisé en ce que** la partie d'enfichage (4) de la cartouche d'enfichage (2) porte au moins une bague d'étanchéité (48) sur sa périphérie extérieure dans une zone située de préférence en amont des éléments de fixation (20) par référence au sens d'introduction (52), dans lequel, de préférence, une courte zone de surface d'étanchéité cylindrique est prévue à l'intérieur de l'ouverture de raccordement (6) dans la zone de la bague d'étanchéité (48).

22. Dispositif de raccordement selon l'une quelconque des revendications 1 à 21, **caractérisé en ce que** la cartouche d'enfichage (2) est réalisée sous la forme d'un élément de couplage mâle pour le raccordement amovible d'une conduite de fluide.

23. Dispositif de raccordement selon l'une quelconque des revendications 1 à 22, **caractérisé en ce que** la cartouche d'enfichage (2) est réalisée sous la forme d'un embout femelle avec une ouverture d'enfichage (10) destinée à recevoir une partie enfichable (12) d'un raccord mâle (14) relié ou apte à être relié à la conduite de fluide.

24. Dispositif de raccordement selon la revendication 23, **caractérisé par** un dispositif de fixation (54) pour le blocage amovible de la partie enfichable (12) dans sa position enfichée dans l'ouverture d'enfichage (10) et étanchée sur le pourtour par un joint d'étanchéité (56).

25. Dispositif de raccordement selon la revendication 23 ou 24, **caractérisé en ce qu'**à l'intérieur de la cartouche d'enfichage (2) est logé un élément de blocage (58) radialement élastique destiné à s'engager par conjugaison de forme et blocage derrière un épaulement de blocage (60) radial de la partie enfichable (12).

26. Dispositif de raccordement selon la revendication 25, **caractérisé en ce que** la cartouche d'enfichage (2) est réalisée en deux parties, formées par une partie extérieure (62) en forme de manchon et une partie intérieure (64) en forme de manchon posée coaxialement dans cette dernière, la cartouche d'enfichage (2) étant apte à être insérée par l'intermédiaire de la partie extérieure (62) de manière inamovible dans l'ouverture de raccordement (6) de la partie formant logement (8), la partie intérieure (64) étant reliée de manière amovible à la partie extérieure (62), et l'élément de blocage (58) étant logé de telle sorte qu'il peut être extrait de la partie extérieure (62) moyennant la désolidarisation de la partie intérieure (64).

27. Dispositif de raccordement selon la revendication 26, **caractérisé en ce que** la partie extérieure (62) et la partie intérieure (64) sont assemblées l'une à l'autre à la manière d'un assemblage à baïonnette.

28. Dispositif de raccordement selon la revendication 26 ou 27, **caractérisé en ce qu'**une fente annulaire entre la partie intérieure (64) et la partie extérieure (62) est étanchée vers l'extérieur par un joint d'étanchéité (66).

29. Dispositif de raccordement selon l'une quelconque des revendications 26 à 28, **caractérisé en ce que** la partie intérieure (64) et la partie extérieure (62) sont assemblées dans la zone munie de parties d'assemblage (68, 70) en forme de brides.

30. Dispositif de raccordement selon l'une quelconque des revendications 26 à 29, **caractérisé par** des moyens destinés à immobiliser la partie intérieure (64) contre toute rotation involontaire par rapport à la partie extérieure (62).

31. Dispositif de raccordement selon la revendication 29 ou 30, **caractérisé par** au moins un élément d'immobilisation (72) en forme de goupille qui s'étend de manière amovible à travers des ouvertures correspondantes des deux parties d'assemblage (68, 70) de la partie intérieure (64) et de la partie extérieure (62).

32. Dispositif de raccordement selon l'une quelconque des revendications 25 à 31, **caractérisé en ce que** l'élément de blocage (58) est réalisé sous la forme d'un élément à double blocage avec deux éléments de blocage partiel (58a, 58b) à distance axiale l'un de l'autre, de telle sorte que la partie enfichable (12) peut être bloquée, d'une part, dans une position de blocage préliminaire partiellement enfichée et, d'autre part, dans une position de blocage intégral, totalement enfichée et rendue étanche aux fluides, dans lequel dans la position de blocage préliminaire, il existe une zone de fuite, délimitée de manière définie et perceptible en particulier acoustiquement.

33. Dispositif de raccordement selon la revendication 32, **caractérisé en ce que** les éléments de blocage partiel (58a, 58b) sont réalisés sous la forme de pinces à ressort métalliques et sont maintenus dans un logement (82) annulaire en forme de cage.

34. Dispositif de raccordement selon la revendication 23 ou 24, **caractérisé en ce qu'**à l'intérieur de la cartouche d'enfichage (2) est logée une bague de serrage (84) fendue et, de ce fait, radialement déformable, laquelle, pour bloquer la partie enfichable (12) formée en particulier par une extrémité d'une conduite de fluide (18), coopère avec un cône intérieur (86) prévu à l'intérieur de l'ouverture d'enfichage (10).

35. Dispositif de raccordement selon la revendication 34, **caractérisé en ce que** la cartouche d'enfichage (2) est réalisée en deux parties, formées par une partie formant boîtier (90), munie de la partie d'enfichage (4), et par une partie enfichable (94), qui est assemblée à ladite partie formant boîtier par un assemblage par conjugaison de forme (92) encliquetable et amovible et qui est munie du cône intérieur (86).

36. Dispositif de raccordement selon la revendication 34 ou 35, **caractérisé en ce qu'**à l'intérieur de la cartouche d'enfichage (2) est disposé un manchon de support (96), s'étendant dans le sens axial et destiné à s'engager par force dans la partie enfichable (12) enfichée.

37. Dispositif de raccordement selon la revendication 23 ou 24, **caractérisé en ce que** la cartouche d'enfichage (2), au niveau d'une partie (98) s'avançant à l'extérieur de la partie formant logement (8), comporte un bord de fixation (102) dirigé radialement vers l'extérieur, le raccord mâle (14) comportant des bras de blocage (104) extérieurs radialement élastiques avec des saillies de blocage (106) orientées radialement vers l'intérieur, qui s'engagent en générant un blocage au-dessus et derrière les bords de fixation (102) de la cartouche d'enfichage (2).

38. Dispositif de raccordement selon l'une quelconque des revendications 1 à 37, **caractérisé en ce que** la cartouche d'enfichage (2) est réalisée en matière plastique, en particulier dans un polyamide renforcé par des fibres.

39. Dispositif de raccordement selon l'une quelconque des revendications 23 à 38, **caractérisé par** des moyens destinés à bloquer le raccord mâle (14) contre toute rotation par rapport à la cartouche d'enfichage (2).

40. Dispositif de raccordement selon l'une quelconque des revendications 1 à 39, **caractérisé par** un élément de butée (108) destiné à limiter de manière définie l'introduction de la partie d'enfichage (4) sous l'effet d'un appui contre la partie formant logement (8).
